# FASCICULE DE BREVET EUROPEEN

(11) **EP 1 499 001 B1**
(45) Date de publication et mention de la délivrance du brevet: **17.09.2008**
(21) Numéro de dépôt: 04291749.2
(22) Date de dépôt: 08.07.2004
(51) Int. Cl.: H02K 3/24

(54) **Dispositif de refroidissement d'une machine électrique, en particulier d'une machine électrique synchrone à aimants permanents**
Kühlvorrichtung für eine elektrische Maschine insbesondere für eine Synchronmaschine mit Dauermagneten
Cooling arrangement for electrical machines specially for a permanent magnet syncronous machine

(30) Priorité: 17.07.2003 FR 0308745
(43) Date de publication de la demande: 19.01.2005
(73) Titulaire: Jeumont Electric, 59640 Jeumont (FR)
(72) Inventeur: Philippart, Olivier, 59300 Valenciennes (FR)
(74) Mandataire: Lebkiri, Alexandre

(56) Documents cités:
- DE-A- 10 158 757
- DE-A- 19 950 418
- GB-A- 796 970
- GB-A- 2 261 327
- US-A1- 2003 001 441

## Description

L'invention concerne un dispositif de refroidissement d'une machine électrique et en particulier d'une machine électrique synchrone à aimants permanents.

Les machines électriques telles que les moteurs ou les alternateurs comportent généralement un stator ayant un circuit magnétique dans lequel sont ménagées des encoches destinées à recevoir des bobinages, réparties dans une direction circonférentielle autour de l'axe du stator, et un rotor monté rotatif autour de l'axe du stator et comportant une surface active sur laquelle sont fixés des éléments magnétiques constitués par des aimants permanents, dans le cas des machines électriques synchrones à aimants permanents.

Les encoches du stator s'étendent dans une direction longitudinale et sur une certaine profondeur, dans le circuit magnétique du stator, dans une direction perpendiculaire à leur direction longitudinale et débouchent sur une face d'entrée du stator disposée en vis-à-vis de la surface active du rotor comportant les éléments magnétiques tels que les aimants permanents. Entre la face d'entrée du stator et la surface active du rotor est ménagé un entrefer dont la largeur est généralement de l'ordre de quelques millimètres. Les encoches du stator s'étendent vers l'intérieur du circuit magnétique du stator sur une certaine profondeur, entre une extrémité d'entrée située le plus près de l'entrefer et un fond situé à l'intérieur du circuit magnétique du stator en direction de son armature (ou carcasse).

Les pertes électriques qui se produisent à l'intérieur de certains éléments des machines électriques produisent un échauffement qui peut être dommageable pour le fonctionnement et le maintien de l'intégrité de la machine. En particulier, dans le cas de machines synchrones à aimant permanent, la très grande majorité des pertes électriques sont produites dans les bobinages et le circuit magnétique du stator. Les aimants permanents du rotor peuvent alors être soumis à un échauffement par échange de chaleur par convexion à l'intérieur de l'entrefer. Un échauffement excessif des aimants permanents se traduit par une diminution de leur induction rémanente et par une diminution des performances de la machine électrique.

De manière générale, il est connu d'utiliser des dispositifs de refroidissement de machines électriques qui assurent un refroidissement du stator par une circulation de fluide d'échange en périphérie extérieure et intérieure du stator. Le dégagement de chaleur dans le stator est alors absorbé par le fluide caloporteur circulant en contact thermique avec le stator sur sa périphérie externe et sur sa périphérie interne.

Le refroidissement de la périphérie externe du stator peut être assuré par un chemisage délimitant une cavité de refroidissement entourant le stator ou dans le cas de machines immergées, par une circulation du fluide d'immersion au contact de la surface externe de la carcasse du stator.

Le refroidissement du stator sur sa périphérie interne, du côté de l'entrefer, peut être assuré par des tubes de refroidissement disposés dans les encoches du stator et alimentés en fluide de refroidissement par un circuit d'alimentation et de recueil de fluide qui peut être commun avec le circuit d'alimentation de la cavité entourant la périphérie extérieure du stator, dans le cas d'un refroidissement assuré à l'intérieur d'un chemisage.

Les tubes de refroidissement sont disposés, dans chacune des encoches, dans une partie de fond de l'encoche, à l'intérieur de la carcasse du stator, c'est-à-dire dans la partie de l'encoche située à l'opposé de l'entrefer. La disposition des tubes de refroidissement dans la partie de fond des encoches est rendue nécessaire pour des raisons électromagnétiques. En effet, un tube réalisé en matériau conducteur utilisé pour la circulation du fluide de refroidissement est le siège de courants induits dont la circulation se traduit par la génération de pertes dans le stator, lorsqu'il est soumis à un champ magnétique variable. La disposition des tubes de refroidissement en fond d'encoches permet de s'affranchir en très grande partie de ce problème de pertes, la variation de champ magnétique en fond d'encoches étant pratiquement nulle. Le tube en fond d'encoche assure le refroidissement du bobinage et du circuit magnétique sans être le siège de pertes notables s'ajoutant aux pertes du stator.

Toutefois, cette disposition n'est pas la plus favorable, en particulier dans le cas des machines synchrones à aimants permanents, dans la mesure où les tubes de refroidissement ne peuvent assurer une protection des aimants permanents contre un échauffement par les bobinages au niveau de la partie d'entrée des encoches dirigée vers l'entrefer. En outre, la densité de perte du stator est plus élevée au niveau du plan de bobinage disposé du côté de l'entrefer, c'est-à-dire à l'entrée de l'encoche, si bien que le refroidissement, lorsqu'on le réalise en fond d'encoches, n'est pas mis en oeuvre dans la zone d'échauffement maximal.

Ces inconvénients sont présents aussi bien dans le cas des machines à flux radial dans lesquelles le rotor est monté à l'intérieur d'un stator de forme annulaire dans une disposition coaxiale que dans le cas des machines discoïdes dans lesquelles le stator et le rotor comportent chacun au moins un disque portant sur une ou deux faces actives des éléments magnétiques, les faces actives des disques de stator et de rotor étant placées en vis-à-vis en ménageant un entrefer, de telle sorte qu'on obtienne une circulation de flux axial, c'est-à-dire suivant la direction de l'axe commun aux disques de rotor et de stator.

Dans le cas des machines à flux radial, la direction longitudinale des encoches est la direction axiale alors que, dans le cas des moteurs discoïdes, la direction longitudinale des encoches est radiale, c'est-à-dire perpendiculaire à l'axe de rotation de la machine électrique discoïde.

Aussi bien dans le cas d'une machine à flux radial que dans le cas d'une machine à flux axial, il est nécessaire de prévoir un dispositif de refroidissement du stator efficace, en particulier lorsque le rotor est un rotor à aimants permanents, la machine étant alors une machine synchrone.

Le but de l'invention est de proposer un dispositif de refroidissement d'une machine électrique comportant un stator dans lequel sont ménagées des encoches successives dans une direction circonférentielle du stator autour d'un axe de stator, renfermant chacune au moins un bobinage et débouchant sur une face d'entrée du stator, et un rotor monté rotatif autour de l'axe du stator ayant une face active disposée en vis-à-vis de la face d'entrée du stator en ménageant un espace libre ou entrefer avec la face d'entrée du stator, sur laquelle sont disposés des éléments magnétiques constitués de préférence par des aimants permanents, chacune des encoches du stator s'étendant dans une direction longitudinale et depuis la face d'entrée du stator dirigée vers l'entrefer, dans une direction perpendiculaire à la direction longitudinale, suivant une certaine profondeur d'encoche, le dispositif de refroidissement comportant, dans chacune des encoches du stator, au moins un tube de refroidissement s'étendant dans la direction longitudinale de l'encoche et des moyens de mise en circulation d'un fluide de refroidissement à l'intérieur de chacun des tubes de refroidissement du stator, les tubes de refroidissement étant en communication à leurs extrémités avec des collecteurs d'alimentation et d'évacuation de fluide de refroidissement reliés à un circuit de refroidissement comportant au moins une pompe et un échangeur de chaleur, de sorte que ledit fluide de refroidissement circule en circuit fermé, ce dispositif de refroidissement permettant d'améliorer sensiblement la protection thermique des éléments magnétiques de rotor constitués de préférence par des aimants permanents.

Dans ce but, pour chacune des encoches du stator, au moins un tube de refroidissement est disposé dans la partie d'entrée de l'encoche la plus proche de l'entrefer.

L'invention concerne en particulier :
- un dispositif de refroidissement d'une machine électrique du type à flux radial comportant un stator de forme annulaire entourant un rotor et comportant des encoches dont la direction longitudinale est parallèle à un axe de la machine électrique commun au rotor et au stator caractérisé par le fait qu'il comporte à la fois un dispositif de refroidissement externe ayant une cavité de circulation de fluide de refroidissement entourant la partie périphérique externe du stator et les tubes de refroidissement interne disposés suivant la direction longitudinale des encoches dans leur partie d'entrée, la cavité du dispositif de refroidissement externe étant en communication avec des collecteurs d'alimentation et d'évacuation de fluide de refroidissement reliés à un circuit de refroidissement comportant une pompe et un échangeur de chaleur ;
- un dispositif de refroidissement d'une machine électrique immergée dans un fluide assurant le refroidissement externe du stator de la machine électrique caractérisé par le fait qu'il comporte uniquement un circuit de refroidissement interne du stator comprenant, dans les parties d'entrée de chacune des encoches du stator, un tube de refroidissement en communication à ses extrémités avec les collecteurs d'alimentation et d'évacuation de fluide de refroidissement reliés à un circuit de refroidissement comportant au moins une pompe et un échangeur de chaleur ;
- dans le cas d'une machine électrique de propulsion navale fixée dans une nacelle suspendue par une jambe de force à la coque d'un navire, les moyens d'alimentation et d'évacuation de fluide de refroidissement du circuit de refroidissement interne du stator comportant en particulier une pompe et un échangeur de chaleur sont disposés dans la jambe de force de suspension de la nacelle ;
- dans le cas d'une machine électrique à flux axial comportant un stator en forme de disque annulaire et un rotor comportant au moins un circuit magnétique en forme de disque, le stator comportant des encoches dont la direction longitudinale est radiale par rapport au disque de stator et perpendiculaire à l'axe de la machine électrique, les tubes de refroidissement sont disposés suivant la direction longitudinale des encoches, dans des directions radiales du circuit magnétique en forme de disque du stator ;

De préférence :
- le fluide de refroidissement est un liquide tel que l'eau.
- les tubes de refroidissement sont en un matériau ayant une faible conductivité électrique inférieure à celle du cuivre et une bonne conductibilité thermique supérieure à celle de la résine époxy.
- les tubes sont en un des matériaux suivants : alliages métalliques tels que les aciers inoxydables et le maillechort, polymères du type LCP, PPS ou nylon, polymères renfermant une charge, matériaux composites.

Afin de bien faire comprendre l'invention, on va décrire à titre d'exemples en se référant aux figures jointes en annexe, plusieurs modes de réalisation d'un dispositif de refroidissement d'une machine électrique, suivant l'invention.

La figure 1 est une vue en coupe d'une machine électrique équipée d'un dispositif suivant l'invention et suivant un premier mode de réalisation, le refroidissement extérieur du stator étant réalisé dans une cavité annulaire limitée par un chemisage.

La figure 2 est une vue en coupe longitudinale partielle d'une machine électrique selon l'invention et selon un second mode de réalisation dans lequel la machine électrique est immergée dans un fluide.

La figure 3 est une vue en perspective schématique d'une partie d'une machine électrique comportant un dispositif de refroidissement interne suivant l'invention.

La figure 4 est une vue partielle en coupe d'une partie interne du stator de la machine électrique à flux radial représentée sur la figure 3.

La figure 5 est une vue en coupe axiale d'une machine à flux axial comportant un dispositif de refroidissement suivant l'invention.

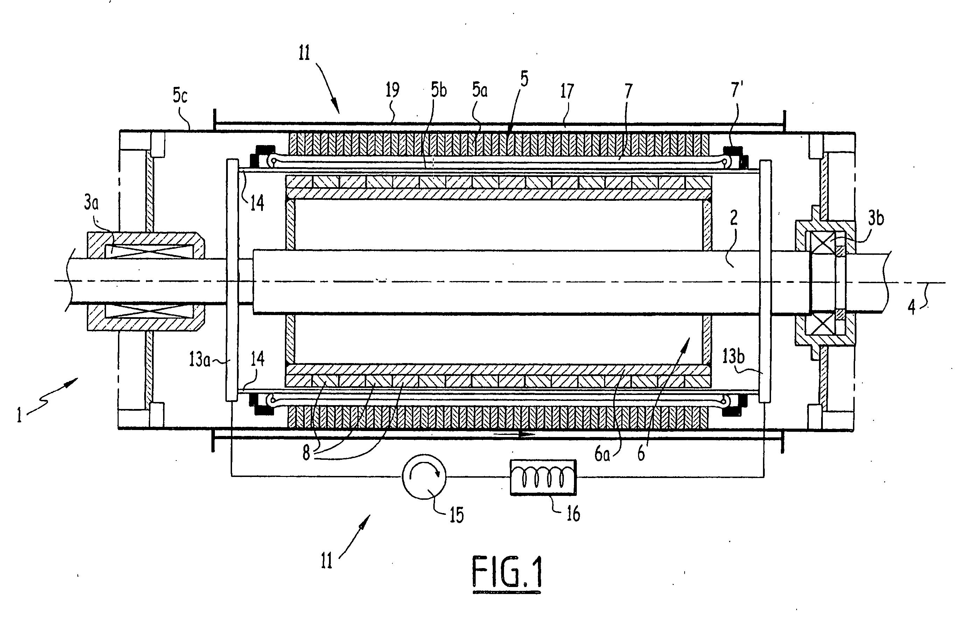

Sur la figure 1, on a représenté l'ensemble d'une machine à flux radial et d'un dispositif de refroidissement du stator de la machine.

La machine à flux radial, désignée de manière générale par le repère 1, comporte un arbre longitudinal 2 monté rotatif autour d'un axe 4 à l'intérieur de paliers 3a et 3b.

Sur l'arbre 2 est calé le rotor 6 de la machine électrique dont le stator 5, de forme annulaire, entoure le rotor suivant toute sa périphérie externe.

Le stator 5 comporte un circuit magnétique 5a qui peut être constitué, au moins partiellement, par un empilement ou un enroulement de tôles magnétiques. A l'intérieur du circuit magnétique 5a du stator sont ménagées des encoches s'étendant suivant toute la longueur du stator dans la direction axiale 4 et sur une certaine profondeur dans la direction radiale. Les encoches sont placées successivement suivant la circonférence de la périphérie interne du stator, autour de l'axe 4 constituant à la fois l'axe du rotor et du stator.

Dans chacune des encoches est disposé au moins un bobinage électrique 7 qui est relié, par des conducteurs électriques 7', à des moyens d'alimentation ou de récupération de courant, suivant la fonction de la machine électrique (moteur ou génératrice). Les bobinages 7 disposés dans les encoches du stator peuvent être constitués de spires empilées l'une sur l'autre suivant plusieurs niveaux d'enroulement, dans la direction radiale des encoches.

Le rotor 6 comporte une jante tubulaire en acier ayant une surface extérieure 6a de forme cylindrique sur laquelle sont fixés des éléments magnétiques tels que des aimants permanents 8 placés suivant toute la longueur du rotor et constituant des rangées successives dans la direction circonférentielle.

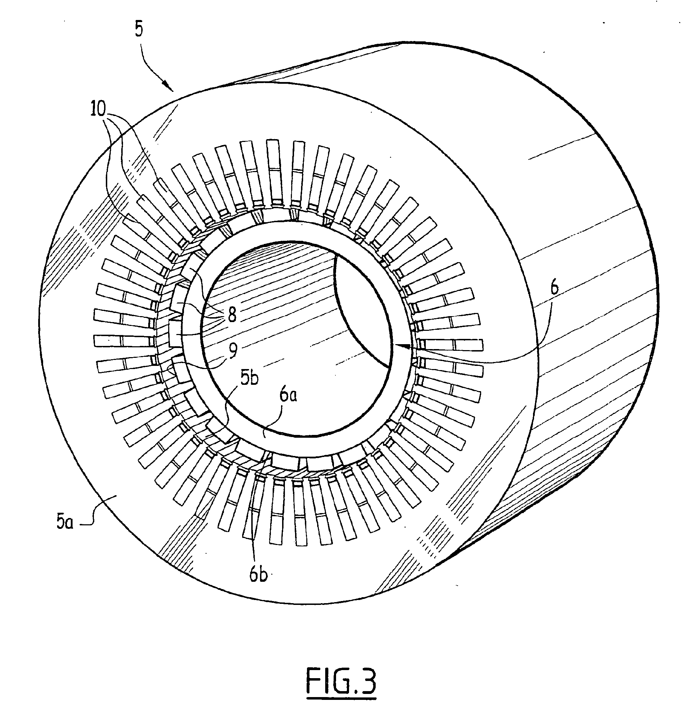

Comme il est visible sur la figure 3, le circuit magnétique 5a du stator présente une forme tubulaire et les encoches successives 10 dans lesquelles sont placés les bobinages 7 sont ménagées à l'intérieur du circuit magnétique, dans des directions radiales, chacune des encoches s'étendant entre une face d'entrée 5b à la périphérie interne du stator 5 sur laquelle débouchent les encoches successives 10 et une partie interne du circuit magnétique 5a du stator. Le rotor a été représenté sur la figure 3 sous la forme d'une pièce annulaire constituant la jante 6a du rotor dont la surface périphérique externe 6b constitue la face active du rotor 6 sur laquelle sont montés les aimants permanents 8. La face d'entrée 5b à la périphérie interne du stator est placée en vis-à-vis de la face active 6b du rotor portant les aimants permanents, un espace libre ou entrefer 9 étant ménagé entre la face d'entrée 5b et la face active 6b.

Chacune des encoches 10 s'étend depuis une partie d'entrée au niveau de l'entrefer 9, jusqu'à une partie de fond à l'intérieur du circuit magnétique 5a du stator.

Le dispositif de refroidissement de la machine électrique comporte un dispositif de refroidissement périphérique externe 11, des tubes de refroidissement interne 14, un premier et un second collecteurs 13a, 13b d'alimentation et de récupération de fluide de refroidissement et un circuit externe d'alimentation des collecteurs comportant, en particulier, une pompe de circulation 15 et un échangeur de chaleur refroidisseur 16 (visibles sur la figure 1 ).

Un fluide de refroidissement (par exemple de l'eau) circule en circuit fermé dans l'espace de refroidissement périphérique externe et dans des tubes de refroidissement interne qui sont reliés, à leurs extrémités longitudinales, aux collecteurs 13a et 13b.

Le dispositif de refroidissement périphérique externe 11 comporte une cavité 17 de forme annulaire entourant la carcasse 5c du stator constituant sa partie périphérique externe. La cavité 17 peut être délimitée par des tôles 19 constituant un chemisage autour de la carcasse 5c assemblées entre elles et à la carcasse 5c par des soudures. La carcasse 5c peut également être usinée pour délimiter une cavité qui est fermée par une tôle périphérique.

A l'intérieur de chacune des encoches 10 du stator est disposé un tube de refroidissement 14 suivant la direction longitudinale axiale de la machine électrique, chacun des tubes de refroidissement 14 étant relié à ses extrémités aux collecteurs 13a et 13b.

Le dispositif de refroidissement périphérique externe 11 et les tubes de refroidissement interne 14 peuvent être reliés aux mêmes collecteurs d'alimentation et de récupération de fluide de refroidissement ou à des collecteurs différents.

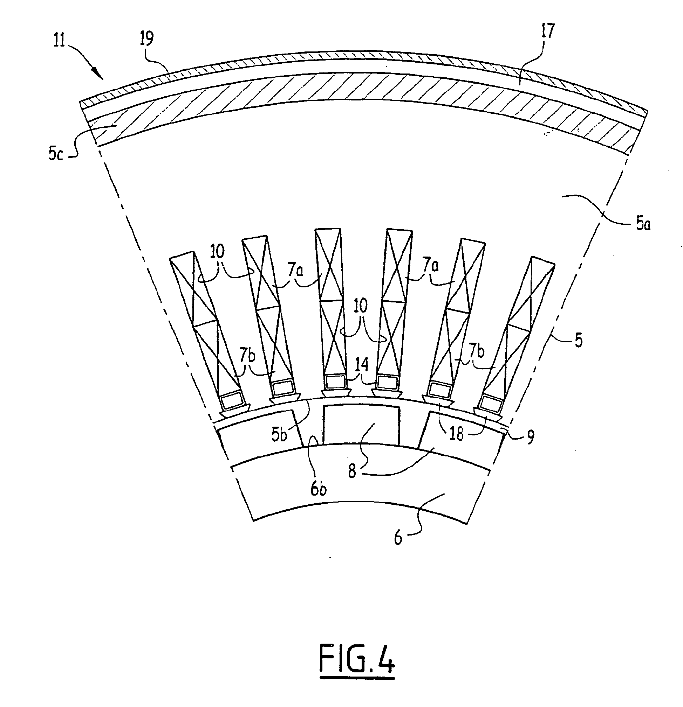

Selon l'invention, comme il est visible en particulier sur la figure 4, les tubes de refroidissement interne 14 du stator sont disposés chacun dans une partie d'entrée d'une encoche 10, c'est-à-dire la partie d'extrémité de l'encoche située à proximité de l'entrefer 9 ménagé entre la face d'entrée 5b du stator à sa partie périphérique interne et les aimants permanents 8 portés par la face active 6b du rotor 6. Chacune des encoches 10 contient au moins un bobinage 7a disposé vers le fond d'encoche et au moins un bobinage 7b disposé vers l'entrefer 9 au contact duquel est placé le tube de refroidissement 14. De ce fait, le tube de refroidissement est au contact du plan de bobinage voisin de l'entrefer suivant lequel la densité de perte et donc l'échauffement sont les plus élevés.

Le tube de refroidissement 14 dont la section peut avoir une forme rectangulaire présente une largeur adaptée à la largeur de l'encoche 10 de manière que le tube soit parfaitement maintenu à l'intérieur de l'encoche et en contact thermique avec le circuit magnétique du stator et le bobinage situé le plus près de l'entrée de l'encoche. Le tube de refroidissement 14 en contact avec la surface externe du bobinage situé vers l'entrefer assure le refroidissement du bobinage par conduction et convexion à l'intérieur du fluide de refroidissement. Chacun des tubes de refroidissement 14 est fixé dans la partie d'entrée d'une encoche 10 par une cale 18 qui peut être engagée dans des rainures usinées dans la partie périphérique interne du circuit magnétique du stator, pour réaliser une fixation des tubes de refroidissement 14, par exemple du type en queue d'aronde. Chacun des tubes 14 est ainsi intercalé et serré entre la partie externe du bobinage disposée dans l'encoche et la cale engagée dans la partie d'entrée de l'encoche.

Les cales 18 peuvent être facilement enlevées et remises en place, de telle sorte que le démontage des tubes de refroidissement 14 est une opération qui peut être réalisée sans difficulté. Il est donc possible d'effectuer facilement le remplacement d'un tube de refroidissement, par exemple lorsque le tube présente une fuite.

Une telle opération n'est pas possible dans le cas de tubes de refroidissement selon l'art antérieur disposés dans les fonds d'encoches, les bobinages étant fixés à demeure à l'intérieur des encoches.

De préférence, les tubes de refroidissement 14 (et éventuellement les cales 18) sont réalisés en un matériau présentant une très faible conductivité électrique et une bonne conductibilité thermique. De tels matériaux peuvent être par exemple des alliages métalliques de compositions adaptées tels que des aciers inoxydables ou le maillechort, des polymères renfermant une charge ou des matériaux composites. On peut utiliser avantageusement des tubes de refroidissement en un matériau commercialisé par Cool Polymers Inc., tels qu'un polymère à structure de cristaux liquides (LCP), un sulfure de polyphénylène (PPS) ou le Nylon 6. De tels matériaux ont une conductibilité thermique supérieure à celle de la résine époxy et une conductibilité électrique inférieure à celle du cuivre.

Le dispositif de refroidissement suivant l'invention comportant des tubes de refroidissement dans les parties d'entrée des encoches du stator permet de protéger beaucoup plus efficacement les aimants permanents 8 portés par la jante du rotor que les dispositifs suivant l'art antérieur. De ce fait, on peut concevoir des machines plus compactes dont les aimants maintenus en température présentent des performances accrues.

Il est possible de combiner le refroidissement interne du stator par des tubes de refroidissement à l'entrée des encoches à un refroidissement externe par tout dispositif disposé dans le circuit magnétique du stator ou à la périphérie de ce circuit magnétique.

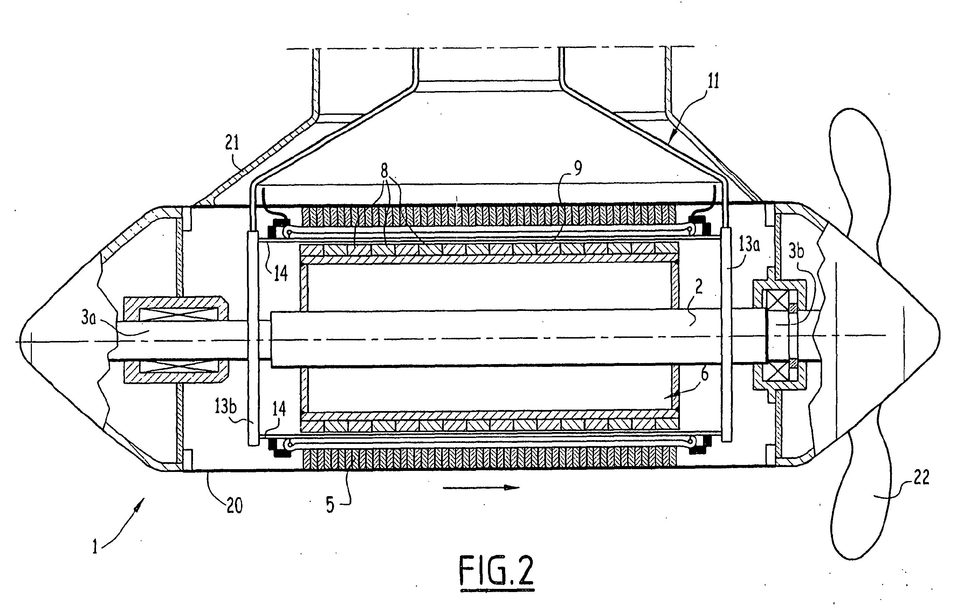

Sur la figure 2, on a représenté une machine électrique comportant un dispositif de refroidissement suivant l'invention et suivant une variante.

Les éléments correspondants sur les figures 1 et 2 sont affectés des mêmes repères.

La machine électrique représentée sur la figure 2 qui peut être utilisée pour assurer la propulsion d'un navire est disposée à l'intérieur d'une nacelle 20 qui est suspendue sous la coque du navire par l'intermédiaire d'une jambe de force 21 et sur laquelle est montée rotative une hélice de propulsion 22 du navire.

La machine électrique 1 montée à l'intérieur de la nacelle 20 comporte un stator 5 fixé dans le corps de la nacelle et un arbre 2 solidaire du rotor 6 de direction longitudinale monté à l'intérieur de parties d'extrémité de la nacelle par l'intermédiaire de paliers 3a et 3b. Le rotor 6 calé sur l'arbre 2 est monté à l'intérieur du stator. Le rotor 6 comporte une surface externe active en vis-à-vis d'une surface périphérique interne d'entrée du stator portant des aimants permanents 8. Entre la face active du rotor portant les aimants permanents 8 et la face interne d'entrée du stator 5 est ménagé un entrefer 9.

Le stator 5 du moteur est réalisé comme décrit précédemment et comporte des encoches successives dans la direction circonférentielle du stator qui débouchent sur la face périphérique interne, ou face d'entrée du stator, au niveau de l'entrefer 9. Chacune des encoches de direction radiale comporte une partie d'entrée du côté de l'entrefer 9 et un fond à l'intérieur de la culasse et du stator.

Le dispositif de refroidissement de la machine électrique, désigné de manière générale par le repère 11, comporte uniquement un circuit de refroidissement interne comportant des tubes 14 placés dans chacune des encoches du stator.

Le refroidissement externe du stator est assuré par l'eau dans laquelle se déplace le navire, à travers la paroi de la nacelle 20.

Le circuit de refroidissement interne du stator comporte, comme précédemment, des tubes de refroidissement 14 disposés chacun dans une partie d'entrée d'une encoche renfermant des bobinages du stator.

Du fluide de refroidissement est mis en circulation dans le circuit de refroidissement interne du stator et en particulier dans les tubes 14 par l'intermédiaire de collecteurs d'alimentation et de récupération 13a et 13b reliés à un circuit de refroidissement comportant en particulier une motopompe et un échangeur de chaleur qui peuvent être disposés à l'intérieur de la jambe de force 21 à laquelle est suspendue la nacelle 20 du navire.

Le fonctionnement et les avantages du dispositif de refroidissement suivant la variante représentée sur la figure 2 sont analogues à ceux qui ont été décrits plus haut en ce qui concerne le premier mode de réalisation représenté sur la figure 1.

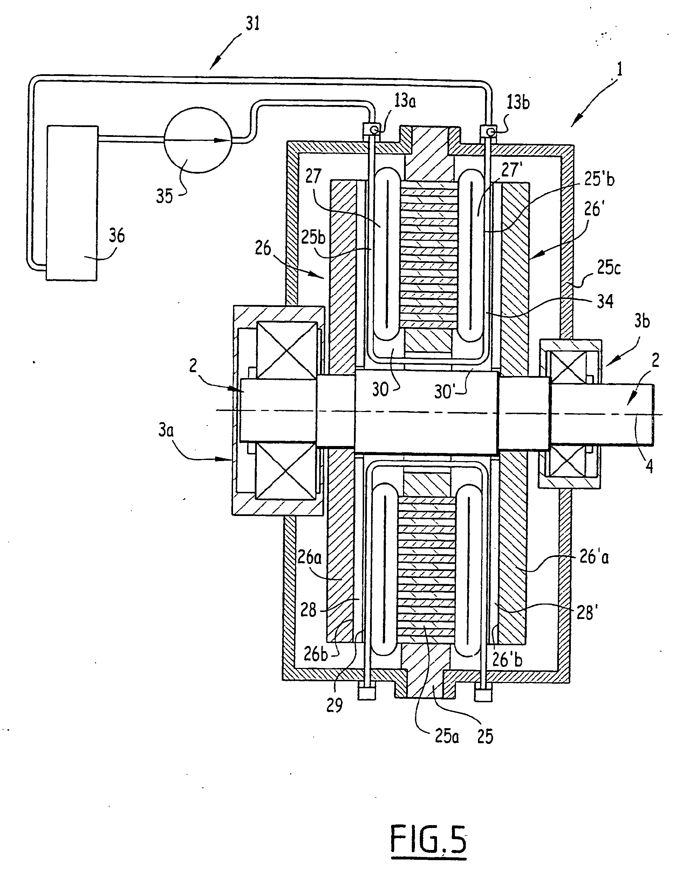

Sur la figure 5, on a représenté une machine électrique à flux axial. La machine électrique dans son ensemble, l'arbre de la machine, les paliers de l'arbre et l'axe de rotation seront désignés respectivement par les repères 1, 2, 3a, 3b et 4, comme dans le cas des machines à flux radial décrites précédemment.

La machine électrique 1 comporte un double stator 25 et un double rotor 26, 26' en forme de disques. Le stator 25 est fixé à l'intérieur d'une carcasse 25c en tôle formant un carter qui entoure la machine électrique. Le stator 25 comporte un circuit magnétique 25a en forme de disque fixée à sa périphérie dans la carcasse 25c et ayant une partie centrale en forme de disque annulaire constituant un circuit magnétique généralement réalisé par enroulement de tôles magnétiques. Le disque de stator ménage sur ses deux faces opposées des encoches 30, 30' s'étendant chacune à l'intérieur du circuit magnétique du stator dans une direction longitudinale radiale par rapport au stator, c'est-à-dire perpendiculaire à l'axe 4 de la machine commun au stator 25 et au rotor 26, 26' et dans une direction parallèle à l'axe 4 de la machine entre une face d'entrée 25b ou 25'b du stator et un fond d'encoche à l'intérieur de la carcasse magnétique. Les encoches 30, 30' du stator sont disposées successivement dans la direction circonférentielle du stator, autour de l'axe 4. Dans chacune des encoches 30, 30' est placé au moins un bobinage 27, 27' s'étendant suivant la direction longitudinale de l'encoche. Les bobinages 27, 27' sont reliés à des moyens d'alimentation ou de récupération de courant électrique.

Le rotor comporte deux éléments de rotor 26 et 26' constitués par des jantes en acier en forme de disques. Les jantes en acier 26a et 26'a du rotor comportent chacune une face active 26b, 26'b sur laquelle sont fixées des rangées d'aimants permanents 28, 28' alignés suivant des directions radiales des culasses annulaires 26b et 26'b pour constituer des rangées successives séparées, dans la direction circonférentielle des disques de rotor, autour de l'axe 4 sur lequel sont fixés les disques de rotor. Les rangées d'aimants de directions radiales sont disposées en vis-à-vis des bobinages 27 du stator, un espace libre ou entrefer 29 d'une épaisseur de quelques millimètres dans la direction radiale étant ménagée entre les aimants du rotor et les bobinages du stator.

Le stator en forme de disque annulaire est traversé, suivant son axe 4 par l'arbre 2 passant à travers une ouverture centrale du stator. Les disques du rotor sont fixés sur l'arbre de manière que le stator, l'arbre 2 et le rotor aient un même axe 4.

Le dispositif de refroidissement de la machine électrique est réalisé suivant l'invention et comporte en particulier un tube de refroidissement 34 placé dans la direction longitudinale de chacune des encoches 30 du stator, dans la partie d'entrée de l'encoche, c'est-à-dire dans la partie d'encoche 30 adjacente à l'entrefer 29. Les tubes 34 qui sont réalisés de la même façon que les tubes 14 des machines à flux radial décrites précédemment sont raccordés à des collecteurs 13a, 13b de distribution et de récupération de fluide de refroidissement eux-mêmes reliés à un circuit de refroidissement 31 comportant une pompe de circulation 35 et un échangeur de chaleur refroidisseur 36.

Le refroidissement extérieur du stator est réalisé par circulation d'un fluide au contact du stator ou de la carcasse 25c du stator.

La réalisation et les avantages du dispositif de refroidissement et en particulier du dispositif de refroidissement interne selon l'invention sont les mêmes que dans le cas des machines à flux radial décrites précédemment.

Les principaux avantages du dispositif suivant l'invention sont les suivants :
- dans le cas de machines électriques présentant des bobinages réalisés en plusieurs plans superposés, la densité de perte est généralement plus élevée au niveau du plan de bobinage disposé du côté de l'entrefer, c'est-à-dire dans la partie d'entrée des encoches et un tube de refroidissement disposé dans cette partie d'encoche permet d'assurer un meilleur refroidissement du plan de bobinage subissant le plus fort échauffement,
- dans le cas de machines synchrones à aimants permanents, les aimants disposés sur le rotor sont particulièrement vulnérables à la température. Un échauffement excessif des aimants se traduit par une diminution de leur induction rémanente et les performances de la machine peuvent s'en trouver altérées. Les tubes disposés en entrée d'encoches permettent de disposer d'une source froide entre le stator dans lequel se produit la majorité des pertes électriques et de l'échauffement et les aimants permanents. En limitant la propagation de chaleur entre le stator et le rotor, on améliore les performances des aimants et on peut concevoir des machines électriques plus compactes.

Dans le cas où l'on utilise des matériaux ayant une conductivité électrique réduite et une bonne conductivité thermique pour réaliser les tubes et éventuellement les cales de fixation des tubes de refroidissement en entrée d'encoches, on limite les pertes dans le stator dues aux variations du champ magnétique au voisinage de la face d'entrée du stator voisine de l'entrefer.

L'invention ne se limite pas strictement aux modes de réalisation qui ont été décrits.

On peut ainsi envisager des dispositifs de refroidissement comportant un circuit externe de refroidissement du stator d'une forme quelconque ou sans circuit de refroidissement externe du stator.

On peut utiliser un circuit de refroidissement interne comportant des tubes de refroidissement seulement dans les parties d'entrée des encoches ou encore des tubes de refroidissement dans les parties d'entrée et dans les fonds d'encoches.

L'invention s'applique au cas de toute machine électrique à flux radial ou à flux axial dont le stator comporte des encoches renfermant des bobinages débouchant au niveau de l'entrefer de la machine électrique.

L'invention s'applique en particulier aux machines électriques de propulsion navale équipant les navires de surface ou les sous-marins.

## Revendications

1. Dispositif de refroidissement d'une machine électrique (1) comportant un stator (5, 25) dans lequel sont ménagés des encoches successives (10, 30, 30') dans une direction circonférentielle du stator (5, 25) autour d'un axe de stator (4), renfermant chacune au moins un bobinage (7, 27, 27') et débouchant sur une face d'entrée (5b, 25b) du stator (5, 25), et un rotor (6, 26) monté rotatif autour de l'axe (4) du stator (5, 25), ayant une face active (6b, 26b) sur laquelle sont disposés des éléments magnétiques (8, 28, 28') constitués de préférence par des aimants permanents disposée en vis-à-vis de la face d'entrée (5b, 25b) du stator (5, 25) et ménageant un espace libre (9, 29) ou entrefer avec la face d'entrée (5b, 25b) du stator (5, 25), chacune des encoches (10, 30, 30') du stator s'étendant dans une direction longitudinale et depuis la face d'entrée (5b, 25b) du stator (5, 25) dirigée vers l'entrefer (9, 29), dans une direction perpendiculaire à la direction longitudinale, suivant une certaine profondeur d'encoche (10, 30, 30'), le dispositif de refroidissement comportant, dans chacune des encoches (10, 30, 30') du stator, au moins un tube de refroidissement (14, 14', 34) s'étendant dans la direction longitudinale de l'encoche (10, 30, 30') et des moyens (11, 31) de mise en circulation d'un fluide de refroidissement à l'intérieur de chacun des tubes de refroidissement (14, 14', 34) du stator (5, 25), les tubes de refroidissement étant en communication à leurs extrémités avec des collecteurs (13a, 13b) d'alimentation et d'évacuation de fluide de refroidissement reliés à un circuit de refroidissement (11, 31) comportant au moins une pompe (15, 35) et un échangeur de chaleur (16, 36), de sorte que ledit fluide de refroidissement circule en circuit fermé, pour chacune des encoches (10, 30, 30') du stator (5, 25), au moins un tube de refroidissement (14, 34) étant disposé dans la partie d'entrée de l'encoche (10, 30, 30') la plus proche de l'entrefer (9, 29), **caractérisé en ce que** le ou chaque tube de refroidissement (14) est fixé dans la partie d'entrée de l'encoche (10, 30, 30') par une cale (18) susceptible d'être enlevée et remise en place en vue du démontage du ou de chaque tube de refroidissement (14).

2. Dispositif de refroidissement selon la revendication 1, **caractérisé par le fait que** le fluide de refroidissement est un liquide tel que l'eau.

3. Dispositif de refroidissement selon l'une quelconque des revendications 1 et 2 d'une machine électrique (1) du type à flux radial comportant un stator (5) de forme annulaire entourant un rotor (6) et comportant des encoches (10) dont la direction longitudinale est parallèle à un axe (4) de la machine électrique commun au rotor (6) et au stator (5), **caractérisé par le fait qu'**il comporte à la fois un dispositif (11) de refroidissement externe ayant une cavité (17) de circulation de fluide de refroidissement entourant la partie périphérique externe du stator et les tubes de refroidissement interne (14) disposés suivant la direction longitudinale des encoches (10) dans leur partie d'entrée, la cavité (17) du dispositif de refroidissement externe (11) étant en communication avec des collecteurs (13a, 13b) d'alimentation et d'évacuation de fluide de refroidissement reliés à un circuit de refroidissement comportant une pompe (15) et un échangeur de chaleur (16).

4. Dispositif de refroidissement suivant l'une quelconque des revendications 1 et 2, dans le cas d'une machine électrique immergée dans un fluide assurant le refroidissement externe du stator (5, 25) de la machine électrique, **caractérisé par le fait qu'**il comporte uniquement un circuit de refroidissement interne du stator (5, 25) comprenant, dans les parties d'entrée de chacune des encoches du stator (10, 30, 30'), un tube de refroidissement (14, 34) en communication à ses extrémités avec les collecteurs (13a, 13b) d'alimentation et d'évacuation de fluide de refroidissement reliés à un circuit de refroidissement (11, 31) comportant au moins une pompe (15, 35) et un échangeur de chaleur (16, 36).

5. Dispositif suivant la revendication 4, dans le cas d'une machine électrique de propulsion navale fixée dans une nacelle (20) suspendue par une jambe de force (21) à la coque d'un navire, **caractérisé par le fait que** les moyens d'alimentation et d'évacuation de fluide de refroidissement du circuit de refroidissement interne du stator comportant en particulier une pompe et un échangeur de chaleur sont disposés dans ta jambe de force (21) de suspension de la nacelle (20).

6. Dispositif suivant la revendication 4 de refroidissement d'une machine électrique à flux axial comportant un stator (25) en forme de disque annulaire et un rotor (26) comportant au moins un circuit magnétique (26a, 26b) en forme de disque, le stator (25) comportant des encoches (30, 30') dont la direction longitudinale est radiale par rapport au disque de stator et perpendiculaire à l'axe (4) de la machine électrique, **caractérisé par le fait que** les tubes de refroidissement (34) sont disposés suivant la direction longitudinale des encoches, dans des directions radiales du circuit magnétique (25a) en forme de disque du stator (25).

7. Dispositif suivant l'une quelconque des revendications 1 à 6, **caractérisé par le fait que** les tubes de refroidissement (14, 34) sont en un matériau ayant une faible conductivité électrique inférieure à celle du cuivre et une bonne conductibilité thermique supérieure à celle de la résine époxy.

8. Dispositif suivant la revendication 7, **caractérisé par le fait que** les tubes de refroidissement sont en un des matériaux suivants : alliages métalliques tels que les aciers inoxydables et le maillechort, polymères du type LCP, PPS ou nylon, polymères renfermant une charge, matériaux composites.

## Claims

1. A cooling arrangement of an electrical machine (1) comprising a stator (5, 25) in which successive recesses (10, 30, 30') are arranged in a circumferential direction of the stator (5, 25) about a stator axis (4), each containing at least one winding (7, 27, 27') and opening out onto an inlet face (5b, 25b) of the stator (5, 25), and a rotor (6, 26) mounted rotatably about the axis (4) of the stator (5, 25), having an active face (6b, 26b) on which are arranged magnetic elements (8, 28, 28') preferably constituted by permanent magnets arranged facing the inlet face (5b, 25b) of the stator (5, 25) and providing a free space (9, 29) or air-gap with the inlet face (5b, 25b) of the stator (5, 25), each of the recesses (10, 30, 30') of the stator extending in a longitudinal direction and from the inlet face (5b, 25b) of the stator (5, 25) directed towards the air-gap (9, 29), in a direction perpendicular to the longitudinal direction, following a certain depth of recess (10, 30, 30'), the cooling arrangement comprising, in each of the recesses (10, 30, 30') of the stator at least one cooling tube (14, 14', 34) extending in the longitudinal direction of the recess (10, 30, 30') and means (11, 31) for setting in circulation a cooling fluid inside each of the cooling tubes (14, 14', 34) of the stator (5, 25), the cooling tubes being in communication at their ends with manifolds (13a, 13b) for the supply and evacuation of cooling fluid, connected to a cooling circuit (11, 31) comprising at least one pump (15, 35) and one heat exchanger (16, 36), so that the said cooling fluid circulates in a closed circuit, for each of the recesses (10, 30, 30') of the stator (5, 25), at least one cooling tube (14, 34) being arranged in the inlet part of the recess (10, 30, 30') closest to the air-gap (9, 29), **characterized in that** the or each cooling tube (14) is fixed in the inlet part of the recess (10, 30, 30') by a block (18) which is able to be removed and put back in place with a view to the dismantling of the or each cooling tube (14).

2. The cooling arrangement according to Claim 1, **characterized in that** the cooling fluid is a liquid such as water.

3. The cooling arrangement according to any of Claims 1 and 2 of an electrical machine (1) of the radial flux type comprising a stator (5) of annular shape surrounding a rotor (6) and comprising recesses (10), the longitudinal direction of which is parallel to an axis (4) of the electrical machine, common to the rotor (6) and to the stator (5), **characterized in that** it comprises both a device (11) for external cooling having a cavity (17) for the circulation of cooling fluid surrounding the external peripheral part of the stator and the tubes for internal cooling (14) arranged in accordance with the longitudinal direction of the recesses (10) in their inlet part, the cavity (17) of the external cooling arrangement (11) being in communication with manifolds (13a, 13b) for the supply and evacuation of cooling fluid connected to a cooling circuit comprising a pump (15) and a heat exchanger (16).

4. The cooling arrangement according to any of Claims 1 and 2, in the case of an electrical machine immersed in a fluid ensuring the external cooling of the stator (5, 25) of the electrical machine, **characterized in that** it comprises solely a circuit for the internal cooling of the stator (5, 25), in the inlet parts of each of the recesses of the stator (10, 30, 30'), a cooling tube (14, 34) in communication at its ends with the manifolds (13a, 13b) for the supply and evacuation of cooling fluid connected to a cooling circuit (11, 31) comprising at least one pump (15, 35) and one heat exchanger (16, 36).

5. The arrangement according to Claim 4, in the case of a naval electrical propulsion machine fixed in a pod (20) suspended by a strut (21) from the hull of a boat, **characterized in that** the means for the supply and evacuation of cooling fluid for the circuit for the internal cooling of the stator comprising in particular a pump and a heat exchanger are arranged in the suspension strut (21) of the pod (20).

6. The arrangement according to Claim 4 for cooling an axial flux electrical machine comprising a stator (25) in the form of an annular disc, and a rotor (26) comprising at least one magnetic circuit (26a, 26b) in the form of a disc, the stator (25) comprising recesses (30, 30'), the longitudinal direction of which is radial in relation to the stator disc and perpendicular to the axis (4) of the electrical machine, **characterized in that** the cooling tubes (34) are arranged according to the longitudinal direction of the recesses, in radial directions of the disc-shaped magnetic circuit (25a) of the stator (25).

7. The arrangement according to any of Claims 1 to 6, **characterized in that** the cooling tubes (14, 34) are of a material having poor electrical conductivity lower than that of copper and having good thermal conductivity higher than that of epoxy resin.

8. The arrangement according to Claim 7, **characterized in that** the cooling tubes are of one of the following materials: metal alloys such as stainless steels and nickel-silver, polymers of the type LCP, PPS or nylon, polymers containing a filler, composite materials.

## Patentansprüche

1. Kühlvorrichtung einer elektrischen Maschine (1), umfassend einen Stator (5, 25), in welchem aufeinanderfolgende Nuten (10, 30, 30') in einer Umfangsrichtung des Stators (5, 25) um eine Statorachse (4) herum ausgespart sind, die jede mindestens eine Wicklung (7, 27, 27') enthalten und an einer Eingangsfläche (5b, 25b) des Stators (5, 25) austreten, und einen Rotor (6, 26), der um die Achse (4) des Stators (5, 25) drehbar montiert ist, mit einer aktiven Fläche (6b, 26b), auf welcher Magnetelemente (8, 28, 28') angeordnet sind, die bevorzugt aus Dauermagneten (8, 28, 28') bestehen, die der Eingangsfläche (5b, 25b) des Stators (5, 25) gegenüberliegend angeordnet sind und mit der Eingangsfläche (5b, 25b) des Stators (5, 25) einen Zwischenraum (9, 29) bzw. Luftspalt aussparen, in einer Richtung rechtwinklig zur Längsrichtung, einer bestimmten Tiefe der Nut (10, 30, 30') entsprechend, wobei jede der Nuten (10, 30, 30') des Stators in einer Längsrichtung und von der dem Luftspalt (9, 29) zugewandten Eingangsfläche (5b, 25b) des Stators (5, 25) aus verläuft, wobei die Kühlvorrichtung in jeder der Nuten (10, 30, 30') des Stators mindestens ein Kühlrohr (14, 14', 34) umfasst, das in der Längsrichtung der Nut (10, 30, 30') verläuft, und Mittel (11, 31) zum Umwälzen eines Kühlmittels im Inneren jedes der Kühlrohre (14, 14', 34) des Stators (5, 25), wobei die Kühlrohre an ihren Enden mit Sammelleitungen (13a, 13b) zum Zuleiten und Ableiten des Kühlmittels in Verbindung stehen, die mit einem Kühlkreis (11, 31) verbunden sind, der mindestens eine Pumpe (15, 35) und einen Wärmeaustauscher (16, 36) umfasst, sodass das Kühlmittel in einem geschlossenen Kreislauf umläuft, wobei für jede der Nuten (10, 30, 30') des Stators (5, 25) mindestens ein Kühlrohr (14, 34) im Eingangsabschnitt der Nut (10, 30, 30') angeordnet ist, der dem Luftspalt (9, 29) am nächsten ist, **dadurch gekennzeichnet, dass** das oder jedes Kühlrohr (14) im Eingangsabschnitt der Nut (10, 30, 30') durch ein Passstück (18) befestigt ist, das zum Ausbau des oder jedes Kühlrohrs (14) entfernt und wieder angebracht werden kann.

2. Kühlvorrichtung nach Anspruch 1, **dadurch gekennzeichnet, dass** das Kühlmittel eine Flüssigkeit wie z. B. Wasser ist.

3. Kühlvorrichtung nach einem der Ansprüche 1 und 2 einer elektrischen Maschine (1) des Typs mit Radialfluss, umfassend einen ringförmigen Stator (5), der einen Rotor (6) umgibt, und umfassend Nuten (10), deren Längsrichtung parallel zu einer dem Rotor (6) und dem Stator (5) gemeinsamen Achse (4) der elektrischen Maschine ist, **dadurch gekennzeichnet, dass** sie sowohl eine äußere Kühlvorrichtung (11), die einem Hohlraum (17) für den Umlauf des Kühlmittels aufweist, der den Außenumfangsabschnitt des Stators umgibt, als auch innere Kühlrohre (14) umfasst, die der Längsrichtung der Nuten (10) entsprechend in ihrem Eingangsabschnitt angeordnet sind, wobei der Hohlraum (17) der äußeren Kühlvorrichtung (11) mit Sammelleitungen (13a, 13b) zum Zuleiten und Ableiten des Kühlmittels in Verbindung steht, die mit einem Kühlkreis verbunden sind, der eine Pumpe (15) und einen Wärmeaustauscher (16) umfasst.

4. Kühlvorrichtung nach einem der Ansprüche 1 und 2 im Falle einer elektrischen Maschine, die in ein Fluid eingetaucht ist, das die äußere Kühlung des Stators (5, 25) der elektrischen Maschine gewährleistet, **dadurch gekennzeichnet, dass** sie nur einen inneren Kühlkreis des Stators (5, 25) umfasst, umfassend, in den Eingangsabschnitten jeder der Nuten des Stators (10, 30, 30'), ein Kühlrohr (14, 34), das an seinen Enden mit Sammelleitungen (13a, 13b) zum Zuleiten und Ableiten des Kühlmittels in Verbindung steht, die mit einem Kühlkreis (11, 31) verbunden sind, der mindestens eine Pumpe (15, 35) und einen Wärmeaustauscher (16, 36) umfasst.

5. Vorrichtung nach Anspruch 4 im Falle einer elektrischen Schiffsantriebsmaschine, die in einer Gondel (20) befestigt ist, die durch eine Strebe (21) am Rumpf eines Schiffs aufgehängt ist, **dadurch gekennzeichnet, dass** die Mittel zum Zuleiten und Ableiten des Kühlmittels des inneren Kühlkreises des Stators, die insbesondere eine Pumpe und einen Wärmeaustauscher umfassen, in der Aufhängungsstrebe (21) der Gondel (20) angeordnet sind.

6. Vorrichtung nach Anspruch 4 zur Kühlung einer elektrischen Maschine mit Axialfluss, umfassend einen Stator (25) in Form einer ringförmigen Scheibe und einen Rotor (26), der mindestens einen scheibenförmigen Magnetkreis (26a, 26b) aufweist, wobei der Stator (25) Nuten (30, 30') aufweist, deren Längsrichtung radial in Bezug auf die Statorscheibe und rechtwinklig zur Achse (4) der elektrischen Maschine ist, **dadurch gekennzeichnet, dass** die Kühlrohre (34) der Längsrichtung der Nuten entsprechend angeordnet sind, in radialen Richtungen des scheibenförmigen Magnetkreises (25a) des Stators (25).

7. Vorrichtung nach einem der Ansprüche 1 bis 6, **dadurch gekennzeichnet, dass** die Kühlrohre (14, 34) aus einem Material bestehen, das eine geringe elektrische Leitfähigkeit hat, die kleiner ist als die von Kupfer, und eine gute Wärmeleitfähigkeit, die größer ist als die von Epoxidharz.

8. Vorrichtung nach Anspruch 7, **dadurch gekennzeichnet, dass** die Kühlrohre aus einem der folgenden Materialien bestehen: Metalllegierungen wie z. B. rostfreie Stähle und Neusilber, Polymere vom Typ LCP, PSP oder Nylon, Polymere, die ein Füllmaterial enthalten, Verbundstoffe.
